# EUROPEAN PATENT APPLICATION

(11) **EP 1 507 432 A2**
(43) Date of publication of application: **16.02.2005**
(21) Application number: 04103824.1
(22) Date of filing: 09.08.2004
(51) Int. Cl.: H04Q 7/38

(54) **Arrangement and method for paging, cellular radio system, and paging controller for cellular radio system**

(30) Priority: 12.08.2003 FI 20031149; 14.10.2003 US 683461
(71) Applicant: Nokia Corporation, 02150 Espoo (FI)
(72) Inventor: Friman, Leif, 04400 Järvenpää (FI)
(74) Representative: Pykälä, Timo Tapani

(57) **Abstract**

Arrangement and method for paging, cellular radio system, and paging controller for cellular radio system is provided. According to one embodiment, the arrangement may include a paging controller, a plurality of base stations, and a transmission network connecting the paging controller and the base stations. The transmission network may include a plurality of routers utilizing the Internet Protocol. The paging controller is configured to transmit a physical layer paging message to a plurality of base stations belonging to the same location area or routing area. The router may be configured to utilize the Internet Protocol Multicast in the routing of the physical layer paging message.

## Description

### BACKGROUND OF THE INVENTION:

### Field of the Invention:

The invention relates to an arrangement for paging in a cellular radio system, a paging method in a cellular radio system, a cellular radio system, and a paging controller for a cellular radio system.

### Description of the Related Art:

Paging refers to a procedure by which a cellular radio system attempts to reach a mobile subscriber terminal within its location area, before any other system-initiated procedure can take place. Location area is a part of the mobile switching center area where a mobile subscriber terminal can move freely without location updating. In a packet-switched cellular radio system a routing area is usually used instead of the location area for paging.

The physical layer paging messages are normally sent by the MSC (Mobile Services Switching Center) or the SGSN (Serving GPRS Support Node, GPRS = General Packet Radio Service), and the BSC (Base Station Controller) or the RNC (Radio Network Controller) helps in reducing the number of physical layer paging messages. The structure of the RAN (Radio Access Network) part of the cellular radio system can be changed so that the RNC is removed. Thus, the MSC or the SGSN has to process more physical layer paging messages than previously.

It would be desirable to reduce the number of messages needed to handle a paging situation. This would reduce the needed processing and transmission capacity for the paging messages in the cellular radio system.

### SUMMARY OF THE INVENTION:

According to an embodiment of the invention, there is provided an arrangement for paging in a cellular radio system. The arrangement includes: a paging controller, a plurality of base stations, and a transmission network. The transmission network connects the paging controller and the base stations. The transmission network includes a plurality of routers utilizing the Internet Protocol. The paging controller may be configured to transmit a physical layer paging message to a plurality of base stations belonging to the same location area or routing area. The router may be configured to utilize the Internet Protocol Multicast in routing the physical layer paging message.

According to another embodiment of the invention, there is provided a paging method in a cellular radio system. The method transmits a physical layer paging message from a paging controller to a plurality of base stations belonging to the same location area or routing area. The paging controller and the base stations may be connected by a transmission network utilizing the Internet Protocol in its routers. The method also routes the physical layer paging message in the transmission network by utilizing the Internet Protocol Multicast in the routers.

According to another embodiment of the invention, there is provided a cellular radio system. The cellular radio system includes a paging controlling mechanism, a plurality of base station mechanisms and a transmission network mechanism. The transmission network mechanism connects the paging controlling mechanism and the plurality of base station mechanisms. The transmission network mechanism includes a plurality of routing mechanisms utilizing the Internet Protocol. The paging controlling mechanism transmits a physical layer paging message to a plurality of base station mechanisms belonging to the same location area or routing area. The routing means utilizes the Internet Protocol Multicast in routing the physical layer paging message.

According to another embodiment of the invention, there is provided a paging controller for a cellular radio system. The cellular radio system includes a control unit for controlling the paging. A communication interface may be connected to the control unit. With the communication interface, the paging controller connects to a plurality of base stations through a transmission network. The control unit may be configured to transmit a physical layer paging message according to the Internet Protocol through the communication interface to a plurality of base stations belonging to the same location area or routing area and to compose the physical layer paging message so that the Internet Protocol Multicast is used in the routing of the physical layer paging message in the transmission network.

The invention provides several advantages. One such advantage is that the loading of the paging controller of the cellular radio system may be relieved. Another advantage is that the transport network connecting the paging controller and base stations can be dimensioned according to a lighter transmission load.

### BRIEF DESCRIPTION OF THE DRAWINGS:

Embodiments of the present invention will be described below with reference to the accompanying drawings, in which

Figure 1 is a simplified block diagram illustrating some parts of a cellular radio system according to an embodiment of the invention;

Figure 2 is a signal sequence chart illustrating handling of the paging messages in the cellular radio system according to an embodiment of the invention;

Figure 3 is a protocol stack diagram illustrating exemplary protocols that can be used for paging in the cellular radio system;

Figure 4 is a simplified block diagram illustrating an exemplary structure of the paging controller; and

Figure 5 is a simplified block diagram illustrating some parts of a cellular radio system according to an embodiment of the invention.

### DETAILED DESCRIPTION OF THE PREFERRED EMBODIMENTS:

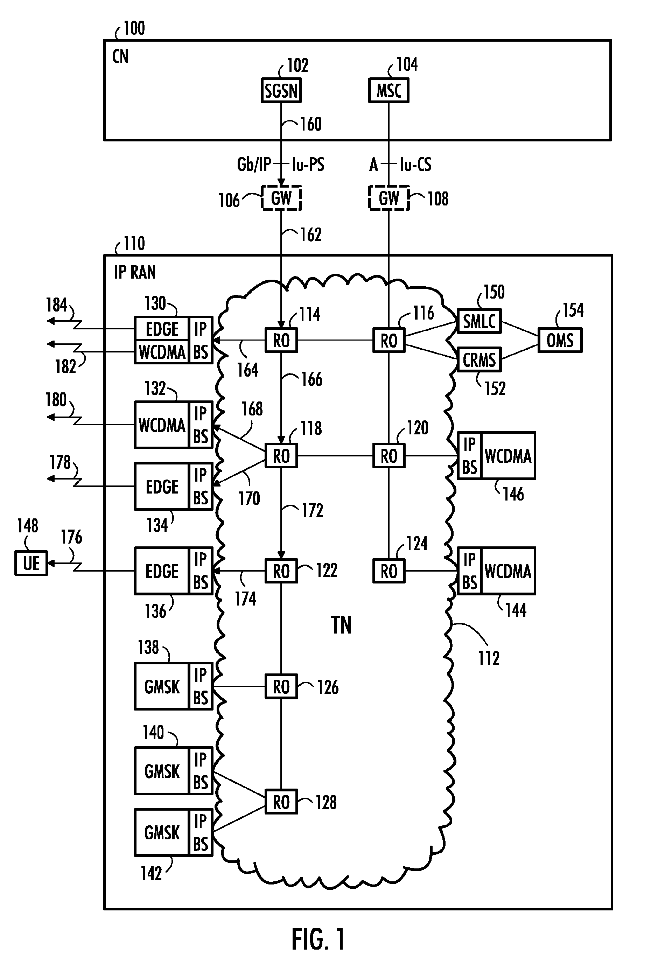

Figure 1 illustrates an example of a cellular radio system to which embodiments of the invention can be applied. Figure 1 illustrates a simplified cellular radio system, which includes the main parts of a radio system: a core network (CN) 100, a radio access network (RAN) 110 and a mobile subscriber terminal 148.

Figure 1 shows the general architecture of an evolutionary cellular radio system using simultaneously different generations of radio access technologies, wherein network elements of different generations coexist. In the embodiment shown in Figure 1, the second generation cellular radio system may be represented by base stations 138, 140, 142 of GSM (Global System for Mobile Communications) using GMSK (Gaussian Minimum Shift Keying) as access technology. The cellular radio system of a 2.5-generation may be represented by base stations 130, 134, 136 of a cellular radio system which is based on the GSM and which uses the EDGE (Enhanced Data Rates for Global Evolution) access technology for increasing the data transmission rate and which can also be used for implementing packet transmission in the GPRS. Base stations 130, 132, 144, 146 may represent a third generation cellular radio system which is known at least by the names IMT-2000 (International Mobile Telecommunications 2000) and UMTS (Universal Mobile Telecommunications System), using WCDMA (Wideband Code Division Multiple Access) as access technology. The same base station 130 may simultaneously implement more than one access technology, such as both the EDGE and WCDMA as shown in Figure 1.

A base station refers to a base transceiver station or node B or any of their equivalents. In the GSM, for example, a base station subsystem (BSS) includes a base station controller (BSC) and base transceiver stations (BTS). The base station controller controls the base transceiver stations. Generally the devices implementing the radio path and their functions should be located in the base transceiver station and the management devices in the base station controller. Different implementations may, however, naturally exist. In the UMTS, for example, a UMTS radio access network (UTRAN) includes radio network subsystems. Each radio network subsystem (RNS) includes a radio network controller (RNC) and nodes B. Node B is rather an abstract concept and frequently replaced by the term "base station." In respect of its functionality, the radio network controller may approximately correspond to the base station controller of the GSM system, and node B may correspond to the base station of the GSM system.

The embodiments are, however, not limited to these radio access technology examples, but the described embodiments are, in general, applicable to paging in any cellular radio system possessing the required qualities. The structure of the core network 100 is well known to one skilled in the art, and hence only the parts needed to explain paging are included in the description. The arrangement for paging in a cellular radio system includes a paging controller. According to the embodiments of the invention, the paging controller can be either the SGSN 102 or the MSC 104. The interface from the SGSN 102 towards the RAN 110 can be a Gb/IP interface in 2.5G systems and an Iu-PS interface in 3G systems, for example. The interface from the MSC 104 towards the RAN 110 can be an A interface in 2G/2.5G systems and an Iu-CS in 3G systems, for example.

The cellular radio system may use an IP (Internet Protocol) technology based radio access network, i.e. an IP RAN (Internet Protocol Radio Access Network) 110. The IP RAN 110 may also enable interoperation with other radio network access technologies and networks, such as the UTRAN (UMTS Radio Access Network) and GERAN (GSM EDGE Radio Access Network).

The IP RAN 110 may include the IP base stations (IP BS) 130, 132, 134, 136, 138, 140, 142, 144, 146. The IP RAN 110 may also include a transmission network 112 connecting the paging controller 102, 104 and the IP base stations. The transmission network 112 may include a plurality of routers 114, 116, 118, 120, 122, 124, 126, 128 utilizing the Internet Protocol.

There can be radio access network gateways 106, 108 that are the access points between the core network 100 and the IP RAN 110. There may be a separate gateway 106 for packet switched connections and a separate gateway 108 for circuit switched connections. A radio network access server (RNAS, not illustrated) can control both gateways 106, 108. The IP RAN 110 further may include a common resource management server (CRMS) 152, which may be responsible for managing the radio resources. The IP RAN 110 may also include other common servers, such as a serving mobile location center (SMLC) 150, which manages the overall coordination and scheduling of resources required to perform positioning of the user equipment 148 and calculates the final location estimate and accuracy. The IP RAN may also include an operation and maintenance server (OMS) 154, which performs centralized system maintenance functions of the IP base stations. Further servers are also possible, however, they are not illustrated in Figure 1 for the sake of clarity. Not all possible connections between different network elements in Figure 1 are shown for the sake of clarity.

In the IP RAN 110, most of the functions of the centralized controller (RNC or BSC) are moved to the IP base station. In particular, all the radio interface protocols are terminated at the IP base station. Entities outside the IP base station may be needed for example to perform common configuration and radio resource (RR) functions, or to interwork with conventional radio access networks or base station subsystems or gateways to the core network 100.

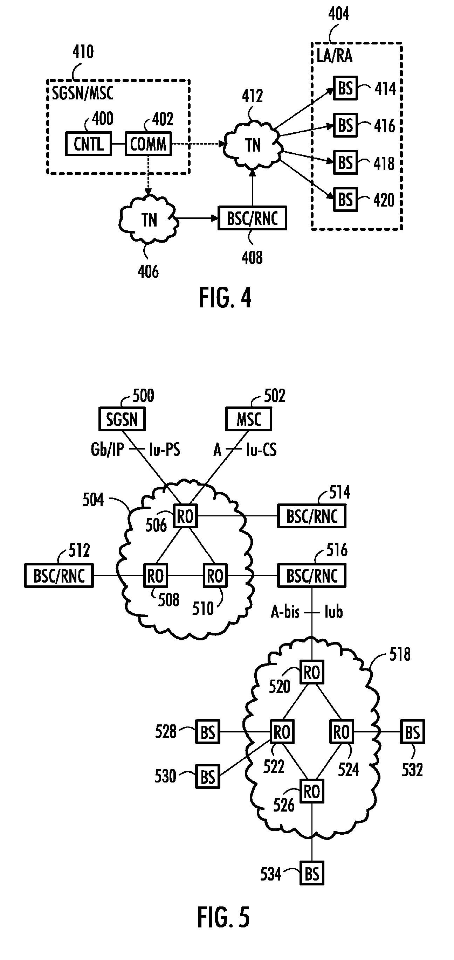

Each base station realizes one or more coverage areas, i.e. radio cells. The purpose of paging is to reach the mobile subscriber terminal within its location area or routing area, before any other network-initiated procedure can take place. In the example shown in Figure 4, the mobile subscriber terminal 148 may be located in the cell of the IP base station 136. The user equipment 148 in this example may be applicable to both 2.5G and 3G systems, including transceivers for establishing a radio connection both using EDGE and WCDMA access technologies. The mobile subscriber terminal 148 may further include an antenna, a user interface and a battery. Various kinds of mobile subscriber terminals 148 are available, e.g. equipment installed in a car and portable equipment, and the mobile subscriber terminal 148 can also have properties similar to those of a personal computer or a portable computer. The mobile subscriber terminal 148 may be connected to the cellular radio system via the base stations of a radio access network, such as the IP RAN 110, for providing the user with access to the core network 100.

In the cellular radio system the system determines in which cell the mobile subscriber terminal 148 is currently located. In a procedure called location updating the mobile subscriber terminal 148 informs the system of its whereabouts. In the location updating a location area may be used as an aid. The location area may be a group of cells, each cell belonging to a single location area. The identity of the location area may be sent on a broadcast channel of the cell, thus informing the mobile subscriber terminal of the location area it is currently located in. When the mobile subscriber terminal 148 changes a cell, for example by performing a handover, two possible scenarios may arise. In the first scenario, if the old and the new cell belong to two different location areas, the mobile subscriber terminal 148 may inform the system of its change of location area (by location updating). In the second scenario, the old and the new cell belong to the same location area, location updating may not be needed.

In the circuit-switched domain the location area is thus the area where the mobile subscriber terminal 148 may move without needing a location updating. The minimum of the location area may be one cell, and the maximum may be all the cells under one visitor location register (VLR) of the MSC 104. The VLR may be a register where all subscriber parameters for call set-up are stored as long as the mobile subscriber is in a location area controlled by this register.

In the packet-switched domain a routing area may be used instead of the location area for location updating procedure. The routing area may be similar to the location area; it may be the area where the mobile subscriber terminal 148 can move without needing to perform a routing area update. One location area can usually have several routing areas within it, but not vice versa, and one routing area cannot belong to two location areas.

In the example of Figure 1, the cells of the base stations 130, 132, 134 and 136 may belong to the same routing area. Thus the paging controller 102 knows that the mobile subscriber terminal 148 is within this known location area, but it does not know within which cell of the base stations 130, 132, 134 and 136 the mobile subscriber terminal 148 actually is located in. If someone tries to place a call on the mobile subscriber terminal 148, the mobile subscriber terminal 148 must be paged before any other system-initiated procedure can take place. In the example shown in Figure 1, the paging controller 102 may be configured to transmit a physical layer paging message to the base stations 130, 132, 134, 136 belonging to the same routing area. The routers 114, 118, 122 may be configured to utilize the Internet Protocol (IP) Multicast in the routing of the physical layer paging message. Thus the paging controller 102 may be configured to transmit one physical layer paging message to a plurality of base stations belonging to the same routing area (or location area when the paging controller is the MSC 104). In modem cellular radio systems the base stations within one location or routing area may utilize different radio access technologies. Thus paging can also be performed as multi-RAT (Radio Access Technology) paging. In the case of multi-RAT paging the mobile subscriber terminal 148 thus may include transceivers for more than one radio access technology.

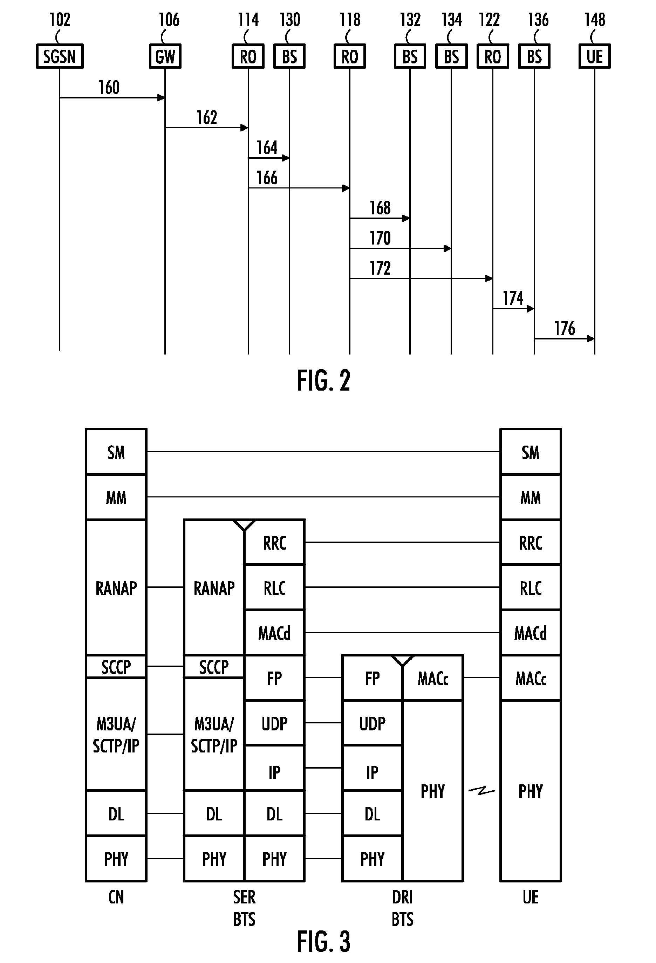

Referring to Figure 1 and Figure 2, an example of the handling of the paging messages in the cellular radio system is provided. In this example, the paging controller 102 transmits the physical layer paging message 160 to the gateway 106, which forwards the physical layer paging message 162 to the transmission network 112. In the transmission network 112 the router 114 may make copies 164, 166 of the physical layer paging message and send them to the base station 130 and the next router 118. The router 118 may make three copies 168, 170, 172 of the physical layer paging message and may send them to the base stations 132, 134 and the router 122. The router 122 may then send the physical layer paging message 174 to the base station 136, and the base station 136 may then sends the paging message 176 to the mobile subscriber terminal 148 on the radio path. As shown in Figure 1, other base stations 130, 132, 134 that belong to the same routing area as the base station 136 may also send the paging messages 178, 180, 182, 184. However, the mobile subscriber terminal 148 may only receive the paging message from base station 136, and may send the paging response to it.

The structure of the physical layer paging message can vary based upon the embodiment of the invention. In the UMTS, for example, a RANAP (Radio Access Network Application Part) paging message may include two mandatory parameters, the requesting core network domain identifier and an identifier identifying the paged subscriber such as an international mobile subscriber identity (IMSI). The RANAP may be a radio access network signaling protocol that includes mechanisms, which handle all the procedures between the core network 100 and the radio access network 110.

The IP Multicast refers to a method of transmitting data (usually streaming data) across the Internet. In the IP Multicast a single data stream may be sent from a server across the network that serves all users who want to receive the broadcast. In the example shown in Figure 1, the data may be sent by the paging controller 102, 104, which is able to compose a physical layer paging message utilizing the IP Multicast principles, and by the IP Multicast enabled routers 114, 116, 118, 120, 122, 124, 126, 128, which may copy the physical layer paging message as needed, for other routers connected to them and finally to individual base stations 130, 132, 134, 136, 138, 140, 142, 144, 146 connected to the routers.

There is no one standard that defines how the IP Multicast should work. One of the specifications that can be used, for example, is the PIM (Protocol Independent Multicast). The IP Multicast routers, utilizing PIM, for example, can be purchased from Cisco®. It is also possible in the embodiments of the invention to use special non-IETF IP Multicast protocol for routing the messages. In such a case the routers 114, 116, 118, 120, 122, 124, 126, 128 know to which base stations 130, 132, 134, 136, 138, 140, 142, 144, 146 they are connected, i.e. they know the topology of the RAN. The routers 114, 116, 118, 120, 122, 124, 126, 128 may then determine where to send the paging messages by examining the cell list and routing area tables.

The IP Multicast addresses may specify a group of IP hosts that have joined the group and may want to receive traffic sent to this group. In the examples shown in Figures 1 and 2, each location area or routing area can have its own IP Multicast address. When the paging controller 102, 104 wants to send a paging message to all base stations within some location area or routing area, it may only send one physical layer paging message to a specific IP Multicast address. This reduces the loading of the paging controller 102, 104 as the routers of the transmission network 112 copy the physical layer paging messages as needed. Such IP Multicast addresses are used for the destination; the source address may be the unicast source address. The Internet Assigned Numbers Authority (IANA) controls the assignment of IP Multicast addresses: all such addresses fall in the range of 224.0.0.0 to 239.255.255.255. Naturally, such addressing schemes may change. The transmission network 112 may be a private network, or a virtual private network, and therefore any suitable addressing scheme may be used as long as the IP Multicast enabled routers can interpret it as IP Multicast.

According to the 3GPP (The 3rd Generation Partnership) specifications, the SGSN 102 may expect the number of RNCs to be equal to the number of Iu interfaces. In an evolved RAN architecture the number of Iu interfaces may equal the number of IP BTSs. Thus there may be a need to enhance the 3GPP specifications to include a new addressing option on Iu that supports IP Multicast. The SGSN 104 may already have all the information needed to build a suitable message.

Next, in Figure 3 exemplary protocols that can be used for paging in the cellular radio system are illustrated. In this example, first protocol stack from the left is that of the core network, the second is that of the serving base station, the third is that of the drift base station, and the fourth is that of the mobile subscriber terminal. The protocol stack of the core network may include the following protocols: SM (Session Management), MM (Mobility Management), RANAP (Radio Access Network Application Part), SCCP (Signaling Connection Control Part), M3UA/SCTP/IP (SS7 (Signaling System number 7) MTP3 (Message Transfer Part Level 3) User Adaptation Layer /Stream Control Transmission Protocol / Internet protocol), DL (Data Link Layer), and PHY (Physical Layer). In the serving base station in the protocol stack positioned next to the core network, the protocols starting from the RANAP headed in a downward direction may include the same protocols as the core network downwards from the RANAP. Towards the drift base station and the mobile subscriber terminal the serving base station may include the following protocols: RRC (Radio Resource Control), RLC (Radio Link Control), MACd (Dedicated Medium Access Control), FP (Frame Protocols), UDP (User Datagram Protocol), IP (Internet Protocol), DL, and PHY. In the drift base station the protocol stack positioned towards the serving base station may include the same protocols as the serving base station, starting in a downward direction from the FP. Towards the mobile subscriber terminal the drift base station may include the following protocol stack: MACc (Common Medium Access Control), and PHY. The mobile subscriber terminal may include the following protocol stack: SM, MM, RRC, RLC, MACd, MACc, and PHY. The paging as a procedure may be performed between the RANAP of the core network and the RRC of the mobile subscriber terminal. All the layers below the RANAP may be used to transport the paging message from the RANAP of the core network to the RRC of the mobile subscriber terminal. At the lowest level, the physical layers may perform the actual transportation by using physical layer paging messages. These protocols are mentioned only as an example that can be used in the UMTS. It is in the scope of normal activities of one skilled in the art to apply the teachings of the embodiments to other protocol stacks having different kinds of protocols above the physical layer. However, Internet Protocol Multicast must be made possible by such other protocols.

In Figure 4 an example structure of the paging controller 410 is illustrated. In this embodiment, the paging controller 410may include, from the paging's point of view, two structural units: a control unit 400 for controlling the paging, and a communication interface 402 connected to the control unit 400. With the communication interface 402, the paging controller 410 may connect to a plurality of base stations 414, 416, 418, 420 through a transmission network 412. The control unit 400 may be configured to transmit a physical layer paging message according to the Internet Protocol through the communication interface 402 to the plurality of base stations 414, 416, 418, 420 belonging to the same location or routing area 404 and to compose the physical layer paging message so that the Internet Protocol Multicast is used in the routing of the physical layer paging message in the transmission network 412. As discussed above, the paging controller 410 can be an SGSN or an MSC, or any other device that may be used for paging control in a cellular radio system. The paging controller 410 may include other units besides those described in Figure 4, but as they are not considered relevant to paging and, as structures of both MSC and SGSN are well known in the art, they are not studied further.

As described in Figure 4, the control unit 400 can be realized in a centralized manner, i.e. as one element. The control unit 400 can, however, also be realized in a distributed manner, i.e. the functionalities of the control unit 400 can be distributed between several elements, such as a MSC and a VLR. Normally, in a computer implementation, the structure and the functionality of the control unit 400 are implemented with at least one processor and software. Other implementation possibilities may include one or more application-specific integrated circuits (ASIC) placed on a circuit board. The control unit 400 may also include other hardware parts, such as other integrated circuits, for example clock circuits. The building blocks of the control unit 400 thus include hardware components, ASIC blocks, and software modules. In selecting the implementation mix, one skilled person may take into consideration for instance the requirements based on the size and power consumption of the control unit 400, the required processing power, manufacturing costs and production volumes. In one embodiment, the control unit 400 may be a software application responsible for paging. Such software application realizes the paging procedure with the aid of protocol stacks described in Figure 3.

The communication interface 402 can be any communication interface including the required hardware and software implementing such an interface that can transmit physical layer paging messages to an IP Multicast transmission network 112.

So far, the examples have described such embodiments where the paging messages are transmitted in Gb, A or Iu interfaces over IP utilizing the IP Multicast, i.e. paging messages are transmitted directly, via routers, from the paging controller to the plurality of base stations. However, also embodiments according to Figure 5 are applicable where the paging messages are transmitted in the Iub and A-bis interfaces over the IP utilizing the IP Multicast.

In Figure 5 the cellular radio system may include, from the paging's point of view, the paging controller, either an SGSN 500 or an MSC 502, a transmission network 504 including routers 506, 508, 510, base station controller/radio network controllers 512, 514, 516, a transmission network 518 including routers 520, 522, 524, 526, and base stations 528, 530, 532, 534. The transmission network 504, 518 may be configured to connect the paging controller 500/502 with the base station controller/radio network controller 516 and the base station controller/radio network controller 516 with the plurality of base stations 528, 530, 532, 534. The paging controller 500/502 is configured to send the physical layer paging message to the plurality of base stations 528, 530, 532, 534 in two phases, first from the paging controller 500/502 to the base station controller/radio network controller 516, and then from the base station controller/radio network controller 516 to the plurality of base stations 528, 530, 532, 534. The base station controller/radio network controller 512 may control one location area or routing area where the base stations 528, 530, 532, 534 belong to. The routers 506, 508, 510, 520, 522, 524 may be configured to utilize the Internet Protocol Multicast in the routing of the physical layer paging message.

In an embodiment of the above described paging method, the transmission can thus include two phases. The first phase may include transmitting the physical layer paging message from the paging controller to a base station controller/radio network controller controlling one location area or routing area, the paging controller and the base station controller/radio network controller being connected by a transmission network utilizing the Internet Protocol in its routers. The second phase may include transmitting the physical layer paging message from the base station controller/radio network controller to the plurality of base stations belonging to the location area or routing area of the base station controller/radio network controller, the base station controller/radio network controller and the plurality of base stations being connected by a transmission network utilizing the Internet Protocol in its routers.

In an embodiment of the paging controller 410 described in Figure 4 the communication interface 402 may further be configured to be connectable to a base station controller/radio network controller 408 through the transmission network 406, and the control unit 400 may further be configured to send the physical layer paging message to the plurality of base stations 414, 416, 418, 420 in two phases. The first phase may be from the paging controller 410 to the base station controller/radio network controller 408, and then the second phase may be from the base station controller/radio network controller 408 to the plurality of base stations 414, 416, 418, 420.

Even though the invention is described above with reference to an example according to the accompanying drawings, it is clear that the invention is not restricted thereto but it can be modified in several ways within the scope of the appended claims.

## Claims

1. An arrangement for paging in a cellular radio system, comprising:
a paging controller;
a plurality of base stations; and
a transmission network connecting the paging controller and the plurality of base stations, the transmission network including a plurality of routers utilizing an Internet Protocol;
wherein the paging controller is configured to transmit a physical layer paging message to the plurality of base stations belonging to a same location area or a same routing area, and the plurality of routers is configured to utilize an Internet Protocol Multicast in routing of the physical layer paging message.

2. The arrangement of claim 1, wherein the plurality of routers is further configured to copy the physical layer paging message.

3. The arrangement of claim 1, wherein the paging controller comprises at least one of a Serving General Packet Radio Service Support Node, and a Mobile Services Switching Center.

4. The arrangement of claim 1, further comprising:
a base station controller or a radio network controller, and
wherein the transmission network is further configured to connect the paging controller with the base station controller or the radio network controller and the base station controller or the radio network controller with the plurality of base stations, and the paging controller is further configured to send the physical layer paging message to the plurality of base stations in two phases, first from the paging controller to the base station controller or the radio network controller, and then from the base station controller or the radio network controller to the plurality of base stations.

5. A paging method in a cellular radio system, the method comprising:
transmitting a physical layer paging message from a paging controller to a plurality of base stations belonging to a same location area or same routing area, the paging controller and the plurality of base stations being connected by a transmission network utilizing an Internet Protocol in routers of the plurality of base stations; and
routing the physical layer paging message in the transmission network by utilizing an Internet Protocol Multicast in the routers.

6. The method of claim 5, wherein the method further comprises:
copying the physical layer paging message.

7. The method of claim 5, wherein the step of transmitting comprises transmitting from the paging controller comprising at least one of a Serving General Packet Radio Service Support Node, and a Mobile Services Switching Center.

8. The method of claim 5, the step of transmitting comprises transmitting in two phases:
transmitting the physical layer paging message from the paging controller to a base station controller or a radio network controller controlling one location area or a routing area, the paging controller and the base station controller or the radio network controller being connected by a transmission network utilizing the Internet Protocol in the routers of the plurality of base stations; and
transmitting the physical layer paging message from the base station controller or the radio network controller to the plurality of base stations belonging to the location area or routing area of the base station controller or the radio network controller, the base station controller or the radio network controller and the plurality of base stations being connected by a transmission network utilizing the Internet Protocol in the routers of the plurality of base stations.

9. A cellular radio system, comprising:
a paging controlling means;
a plurality of base station means; and
a transmission network means connecting the paging controlling means and the plurality of base station means, the transmission network means including a plurality of routing means utilizing the Internet Protocol;
wherein the paging controlling means transmits a physical layer paging message to a plurality of base station means belonging to a same location area or a same routing area, and the routing means utilizes the Internet Protocol Multicast in routing of the physical layer paging message.

10. The cellular radio system of claim 9, wherein the routing means copies the physical layer paging message.

11. The cellular radio system of claim 9, wherein the paging controlling means comprises at least one of a Serving General Packet Radio Service Support Node, and a Mobile Services Switching Center.

12. The cellular radio system of claim 9, further comprising:
a base station or a radio network controlling means,
wherein the transmission network means is further configured to connect the paging controlling means with the base station or the radio network controlling means and to connect the base station controller or the radio network controlling means with the plurality of base station means, and
wherein the paging controlling means is further configured to send the physical layer paging message to the plurality of base station means in two phases, first from the paging controlling means to the base station or the radio network controlling means, and then from the base station or the radio network controlling means to the plurality of base station means.

13. A paging controller for a cellular radio system, comprising:
a control unit for controlling paging; and
a communication interface connected to the control unit, with the communication interface a paging controller is connectable to a plurality of base stations through a transmission network;
wherein the control unit is configured to transmit a physical layer paging message according to an Internet Protocol through the communication interface to a plurality of base stations belonging to a same location area or a same routing area and to compose the physical layer paging message so that an Internet Protocol Multicast is used in routing the physical layer paging message in the transmission network.

14. The paging controller of claim 13, wherein the paging controller comprises at least one of a Serving General Packet Radio Service Support Node, and a Mobile Services Switching Center.

15. The paging controller of claim 13, wherein the communication interface is further configured to be connectable to a base station controller or a radio network controller through the transmission network, and the control unit is further configured to send the physical layer paging message to the plurality of base stations in two phases, first from the paging controller to the base station controller or the radio network controller, and then from the base station controller or the radio network controller to the plurality of base stations.
